# EUROPÄISCHE PATENTSCHRIFT

(11) **EP 0 859 018 B1**
(45) Veröffentlichungstag und Bekanntmachung des Hinweises auf die Patenterteilung: **24.11.2004**
(21) Anmeldenummer: 98101523.3
(22) Anmeldetag: 29.01.1998
(51) Int. Cl.: C08G 18/66

(54) **Verfahren zur Herstellung einer homogenen entmischungsstabilen Polyolkomponente**
Process for the preparation of a homogeneous polyol component stable to demixing
Procédé de préparation d'un composant polyol homogène stable à la séparation

(30) Priorität: 17.02.1997 DE 19705991
(43) Veröffentlichungstag der Anmeldung: 19.08.1998
(73) Patentinhaber: BASF AKTIENGESELLSCHAFT, 67056 Ludwigshafen (DE)
(72) Erfinder: Falke, Peter, Dr., 01987Schwarzheide (DE); Hendreich, Regina, 01945 Frauendorf (DE); Fritz, Ralf, Dr., 67158 Ellerstadt (DE); Rotermund, Inge, 01990 Ortrand (DE)

(56) Entgegenhaltungen:
- EP-A- 0 543 250
- US-A- 4 644 015

## Beschreibung

Die Erfindung betrifft ein Verfahren zur Herstellung einer homogenen Polyurethankomponente, bestehend aus einem oder mehreren höhermolekularen Verbindungen mit mindestens zwei reaktiven Wasserstoffatomen, insbesondere Polyolen, und Anteilen an Kettenverlängerern und/oder Vernetzern sowie gegebenenfalls Treibmitteln, Katalysatoren und weiteren Hilfsmitteln und/oder Zusatzstoffen.

Diese Komponenten aus Polyolen und hohen Anteilen an Kettenverlängerern und/oder Vernetzern neigen häufig dazu, sich nach kurzer Zeit zu entmischen.

Die Erfindung beschreibt ein Verfahren, wie durch Zusatz geringer Anteile von primären und/oder sekundären Aminen und/oder Alkanolaminen und nachfolgender Umsetzung der so homogenisierten Polyolkomponente mit geringen Anteilen an Isocyanaten und/oder NCO-gruppentragenden Verbindungen eine dauerhaft entmischungsstabile Abmischung erzielt werden kann.

Die Herstellung von Polyurethanen (PUR) durch Umsetzung von organischen und/oder modifizierten organischen Polyisocyanaten bzw. Prepolymeren mit höher funktionellen Verbindungen mit mindestens zwei reaktiven Wasserstoffatomen, beispielsweise Polyoxyalkylenpolyaminen und/oder vorzugsweise organischen Polyhydroxylverbindungen, insbesondere Polyetherolen mit Molekulargewichten von z.B. 300 bis 6000, und Kettenverlängerungs- und/oder Vernetzungsmitteln mit Molekulargewichten bis ca. 400, gegebenenfalls in Gegenwart von Katalysatoren, Treibmitteln und Hilfsmitteln und/oder Zusatzstoffen, ist bekannt und wurde vielfach beschrieben. Eine zusammenfassende Übersicht über die Herstellung von Polyurethanschaumstoffen wird z.B. im Kunststoff-Handbuch, Band VII, "Polyurethane", 1. Auflage 1966, herausgegeben von Dr. R. Vieweg und Dr. A. Höchtlen sowie 2. Auflage, 1983, und 3. Auflage, 1993, jeweils herausgegeben von Dr. G. Oertel (Carl Hanser Verlag, München) gegeben.

Für zahlreiche Anwendungsgebiete ist es häufig wünschenswert, deutliche Anteile an Kettenverlängerern und/oder Vernetzern in die Polyolkomponente einzubringen, da eine Reihe von Eigenschaften damit positiv beeinflußt werden kann. Von Nachteil ist allerdings die Tatsache, daß diese Polyolmischungen nicht homogen bleiben, sondern nach relativ kurzer Zeit separate Phasen ausbilden.

So wird versucht, durch die Verwendung von kolloidalem Siliciumdioxid eine Phasenentmischung derartiger Komponenten zu verhindern (US-A-3945939). Dieses Verfahren ist sehr aufwendig und beeinflußt desweiteren die Verarbeitungseigenschaften des Systems.

In JP-A-07110617 wird versucht, durch eine spezielle Polyolstruktur die Mischbarkeit derartiger Komponenten zu verbessern. Dazu werden spezielle verträglichkeitsfördernde Polyole benötigt, die ansonsten im System nicht angewendet werden.

EP-A-0543250 beschreibt ein separationsverhinderndes Mittel aus Dicyandiamid, Guanidin und Guanidinderivaten. Durch diese Zusätze kann wiederum das Verarbeitungsverhalten des PUR-Systems beeinflußt werden.

In US-A-4786435 werden Phenolderivate zur Phasenhomogenisierung verwendet. Für zahlreiche PUR-Anwendungen sind diese Phenolzusätze nicht von Vorteil.

In EP-A-0116172 wird versucht, durch das Einbringen von in-situ erzeugten Urethanstrukturen eine Phasenhomogenität zu sichern. Dabei sind aber in der Regel deutliche Urethananteile erforderlich.

In US-A-4385133 dienen ethylenoxidreiche Polyole als Löslichkeitsvermittler. Diese Derivate sind oftmals in den PUR-Systemen nur begrenzt einsetzbar, da diese die Reaktivität und Zellöffnung stark beeinflussen.

Die Aufgabe der Erfindung bestand darin, ein Verfahren zur Herstellung von homogenen, sich nicht entmischenden Polyol-Kettenverlängerer- und/oder Polyol-Vernetzergemischen, gegebenenfalls im Beisein von Treibmitteln, Katalysatoren und weiteren Hilfsmitteln und/oder Zusatzstoffen, zu erzeugen.

Erfindungsgemäß wurde die Aufgabe dadurch gelöst, daß dem Gemisch der genannten Einsatzstoffe in geringen Mengen mindestens ein primäres und/oder sekundäres Amin sowie mindestens ein organisches und/oder modifiziertes organisches Isocyanat zugesetzt werden.

Gegenstände der Erfindung sind demzufolge ein Verfahren zur Herstellung einer homogenen entmischungsstabilen Polyolkomponente, bestehend aus mindestens einer höhermolekularen Verbindung mit mindestens zwei reaktiven Wasserstoffatomen und niedermolekularen Kettenverlängerungs- und/oder Vernetzungsmitteln sowie gegebenenfalls Treibmitteln, Katalysatoren und weiteren Hilfsmitteln und/oder Zusatzstoffen, das dadurch gekennzeichnet ist, daß dieser Komponente mindestens ein primäres und/oder sekundäres Amin in Anteilen von 0,05 bis 7 Gew.-%, bezogen auf das Gewicht der Polyolkomponente, sowie mindestens ein organisches und/oder modifiziertes organisches Isocyanat in Anteilen von 0,05 bis 5 Gew.-%, bezogen auf das Gewicht der Polykomponente, zugegeben werden, sowie die entsprechende entmischungsstabile Polyolkomponente.

Gegenstand der Erfindung ist weiterhin die Verwendung dieser Polyolkomponente zur Herstellung von PUR, insbesondere kompakten und geschäumten PUR.

Überraschenderweise wurde gefunden, daß lagerstabile Gemische aus Kettenverlängerern/Vernetzern mit Polyolen erhalten werden, wenn diese mit speziellen Aminderivaten, insbesondere primären Aminen, versetzt werden und diese Mischung mit einer geringen Isocyanatmenge zur Reaktion gebracht wird. Bereits das Zumischen geringer Anteile an primären und/oder sekundären Aminen und/oder Alkanolaminen zu dem durch Rühren homogenisierten Gemisch aus ein oder mehreren Polyolen und den entsprechenden Anteilen an Kettenverlängerern und/oder Vernetzern sowie gegebenenfalls Treibmitteln, Katalysatoren und weiteren Hilfsmitteln und/oder Zusatzstoffen in Verbindung mit einer nachfolgenden Umsetzung des so erzeugten Gemisches mit geringen Anteilen an zugesetzten Isocyanaten bzw. NCO-gruppentragenden Verbindungen reicht aus, um eine langfristig lagerstabile homogene Komponente zu erhalten. Die sich dabei ausbildenden Spezies verhindern wirkungsvoll eine Phasenseparation. Dabei kommt es in der Komponente zu einer leichten Viskositätserhöhung, die auch den Erfolg der Umsetzung anzeigt. Eine Temperaturerhöhung ist aufgrund der nur geringen Umsatzmengen nicht zu verzeichnen. Dabei zeigt diese Art der Stabilisierung der Gemische aus Polyol und Kettenverlängerern/Vernetzern keine nachteiligen Auswirkungen auf die Endeigenschaften der so erzeugten Polyurethane.

Erfindungsgemäß können nach diesem Verfahren höhermolekulare Verbindungen mit mindestens zwei reaktiven Wasserstoffatomen und niedermolekulare Kettenverlängerungs- und/oder Vernetzungsmitteln, die nicht oder nur schwer mischbar sind, in einer Polyolkomponente eingesetzt werden.

Als höhermolekulare Verbindungen mit mindestens zwei reaktiven Wasserstoffatomen werden vorzugsweise solche mit aciden H-Atomen, insbesondere Polyetherole und/oder Polyesterole, verwendet. Hierfür können grundsätzlich alle in der PUR-Chemie üblichen höhermolekularen Verbindungen mit mindestens zwei reaktiven Wasserstoffatomen eingearbeitet werden, wie sie beispielsweise weiter unten bei den Ausführungen zur Komponente (b) beschrieben sind.

Als niedermolekulare Kettenverlängerungs- und/oder Vernetzungsmittel können ebenfalls grundsätzlich alle in der PUR-Chemie üblichen Kettenverlängerungs- und/oder Vernetzungsmittel eingesetzt werden, wie sie beispielsweise weiter unten bei den Ausführungen zur Komponente (c) beschrieben sind. Das mittlere Molekulargewicht der eingesetzten Kettenverlängerer und/oder Vernetzer liegt vorteilhafterweise zwischen 62 und 600 g/mol.

Beispielhaft für den erfindungsgemäßen Einsatz seien hier genannt Gemische aus folgenden höhermolekularen Verbindungen mit mindestens zwei reaktiven Wasserstoffatomen und niedermolekularen Kettenverlängerungs- und/oder Vernetzungsmitteln, wie ein Gemisch aus Polyetheralkoholen mit endständigen primären OH-Gruppen und Ethylenglykol und/oder Butandiol-1.4 in Anteilen von >10 Gew.-Tl., bezogen auf den Polyetheralkohol, oder Gemische aus Adipinsäureestern (mittleres Molekulargewicht > 1000 g/mol) und Ethylenglykol in Anteilen von > 10 Gew.-Tl., die ebenfalls nach kurzer Zeit zum Entmischen neigen.

Die eingesetzten schwer oder nicht mischbaren höhermolekularen Verbindungen mit mindestens zwei reaktiven Wasserstoffatomen und niedermolekularen Kettenverlängerungs- und/oder Vernetzungsmittel werden vorteilhafterweise in einem Verhältnis von 95 zu 5 bis 70 zu 30, vorzugsweise von 90 zu 10 bis 80 zu 20, Gew.-Tl. zueinander verwendet.

Der Anteil der Kettenverlängerer und/oder Vernetzer, bezogen auf die Polyolkomponente, beträgt dabei vorzugsweise 1 bis 30 Gew.-Tl., insbesondere 3 bis 25 Gew.-Tl.

Der Anteil der höhermolekularen Verbindungen mit mindestens zwei reaktiven Wasserstoffatomen, bezogen auf die Polyolkomponente, beträgt vorzugsweise 70 bis 95 Gew.-Tl.

Die homogene entmischungsstabile Polyolkomponente wird erfindungsgemäß erzeugt, indem den Bestandteilen der Polyolkomponente, bestehend aus mindestens einer höhermolekularen Verbindung mit mindestens zwei reaktiven Wasserstoffatomen und niedermolekularen Kettenverlängerungs- und/oder Vernetzungsmitteln sowie gegebenenfalls Treibmitteln, Katalysatoren und weiteren Hilfsmitteln und/oder Zusatzstoffen, geringe Anteile an speziellen Aminderivaten zugesetzt werden. Diese Mischung wird innig verrührt. Dazu gibt man eine geringe Menge eines Isocyanates und verrührt die ganze Mischung. In einer vorteilhaften Ausführungsform wird nach Zugabe der Isocyanate etwa 20 Minuten bei Raumtemperatur intensiv gerührt.

Es ist auch möglich, das eingesetzte Isocyanat vor der Herstellung der entmischungsstabilen Polyolkomponente mit einem Teil des Basispolyols zu verrühren und dann die anderen Bestandteile der polyolischen Komponente unter Rühren zuzusetzen.

Wird als Treibmittel Wasser verwendet, hat es sich als günstig erwiesen, dieses nicht bei der Herstellung der Dispersion, sondern erst später, vor der Herstellung des PUR, der Polyolkomponente hinzuzufügen. Ebenso können weitere Systembestandteile der polyolischen Komponente auch nachträglich zugesetzt werden.

Erfindungsgemäß werden als Amine primäre und/oder sekundäre Amine, besonders bevorzugt primäre Amine, eingesetzt. Diese Amine sollten mehrfunktionell sein, können aber auch Anteile an monofunktionellen Aminen enthalten. Dabei kommen vorzugsweise aliphatische und/oder cycloaliphatische Amine zur Anwendung. Die Aminderivate können weitere funktionelle Gruppen wie -OH oder -SH aufweisen. Ebenso können Anteile von Alkanolaminen und Amingemische eingesetzt werden.

Beispielhaft seien aufgeführt: Hexamethylendiamin, Ethylendiamin, 4,4'-Methylenbiscyclohexylamin, NH₂-Gruppen tragende Polyole wie z.B. Jeffamintypen, 3,3'-Imidopropylamin, Fettamine, Diethylentriamin, Triethylentetramin, Propylendiamine, Butylendiamine, Diethanolamin und Ethanolamin.

Desweiteren ist erfindungsgemäß auch der Einsatz von in der Polyurethanchemie üblichen aromatischen Aminen möglich, wie beispielsweise Toluylendiaminen, insbesondere Diethyltoluylendiamin, oder Aminen der Diphenylmethanreihe.

Vorzugsweise werden 2,2'-Dimethyl-4,4'-methylenbiscyclohexylamin, Cocosfettamin und N-oleylpropylendiamin eingesetzt.

Die Amine kommen in Anteilen von 0,05 bis 7 Gew.-%, vorzugsweise von 0,5 bis 3,0 Gew.-%, bezogen auf das Gewicht der Polyolkomponente, zum Einsatz.

Der polyolischen Komponente, der das entsprechende primäre oder sekundäre Amin zugesetzt wurde, wird nun unter Rühren oder einer anderen geeigneten Technik des Vermischens mindestens ein organisches und/oder modifiziertes organisches Isocyanat zugemischt. Hierzu sind prinzipiell alle weiter unten als Komponente (a) aufgeführten Isocyanate verwendbar. Vorzugsweise werden jedoch aromatische Isocyanate eingesetzt. Insbesondere bevorzugt sind 2,4- und 2,6-Toluylendiisocyanate, 4,4'- und 2,4'-Diphenylmethandiisocyanate, Polyphenylpolymethylenpolyisocyanate und NCO-Gruppen enthaltende Prepolymere sowie Mischungen aus diesen Verbindungen.

Die organischen und/oder modifizierten organischen Isocyanate werden dabei in Anteilen von 0,05 bis 5 Gew.-%, vorzugsweise von 0,5 bis 2,0 Gew.-%, bezogen auf das Gewicht der Polyolkomponente, eingesetzt.

Besonders entmischungsstabile Polyolkomponenten werden errreicht, wenn 0,5 bis 2,0 Gew.-% Amin und 0,5 bis 2,0 Gew.-% Isocyanat mit den übrigen Bestandteilen der Polyolkomponente verarbeitet werden.

Die nach Zugabe der organischen und/oder modifizierten organischen Isocyanate ablaufende Umsetzung macht sich in einem Viskositätsanstieg bemerkbar.

Bei der erfindungsgemäßen Herstellung der entmischungsstabilen Polyolkomponente ist diese auch bei längerer Lagerzeit homogen und absetzstabil. Das sonst notwendige Aufrühren der Polyolkomponente vor der Verarbeitung ist nicht erforderlich.

Die erfindungsgemäße homogene entmischungsstabile Polyolkomponente, bestehend aus mindestens einer höhermolekularen Verbindung mit mindestens zwei reaktiven Wasserstoffatomen und niedermolekularen Kettenverlängerungs- und/oder Vernetzungsmitteln, sowie gegebenenfalls Treibmitteln, Katalysatoren und weiteren Hilfsmitteln und/oder Zusatzstoffen, ist herstellbar durch Zugabe mindestens eines Amins sowie mindestens eines organischen und/oder modifizierten organischen Isocyanates.

Sie wird vorzugsweise zur Herstellung von Polyurethanen eingesetzt.

Die Herstellung der Polyurethane erfolgt in an sich bekannter Weise durch Umsetzung von
a) organischen und/oder modifizierten organischen Isocyanaten mit
b) mindestens einer höhermolekularen Verbindung mit mindestens zwei reaktiven Wasserstoffatomen und
c) niedermolekularen Kettenverlängerungs- und/oder Vernetzungsmitteln
   sowie gegebenenfalls
d) Treibmitteln,
e) Katalysatoren und
f) weiteren Hilfsmitteln und/oder Zusatzstoffen.

Erfindungsgemäß wird dabei zunächst aus den Komponenten (b) und (c) und gegebenenfalls (d) bis (f) in Verbindung mit mindestens einem Amin sowie mindestens einem organischen und/oder modifizierten organischen Isocyanat wie oben beschrieben eine lagerstabile homogene Polyolkomponente hergestellt, die dann, vorzugsweise nach Lagerung und gegebenenfalls unter Zugabe weiterer Komponenten (b) bis (f) bzw. von Anteilen dieser Komponenten, mit der Komponente (a) umgesetzt wird.

Zur Herstellung der homogenen entmischungsstabilen Polyolkomponente und der PUR auf deren Basis werden neben den oben beschriebenen speziellen und vorzugsweise verwendeten Verbindungen die an sich bekannten Aufbaukomponenten eingesetzt, zu denen im einzelnen folgendes auszuführen ist:
a) Als organische und/oder modifizierte organische Isocyanate zur Herstellung der erfindungsgemäßen PUR und zur Stabilisierung der Polyolkomponente kommen die an sich bekannten aliphatischen, cycloaliphatischen araliphatischen und vorzugsweise aromatischen mehrwertigen Isocyanate in Frage.
   Im einzelnen seien beispielhaft genannt: Alkylendiisocyanate mit 4 bis 12 Kohlenstoffatomen im Alkylenrest, wie 1,12-Dodecandiisocyanat, 2-Ethyl-tetramethylendiisocyanat-1,4, 2-Methylpentamethylendiisocyanat-1,5, Tetramethylendiisocyanat-1,4 und vorzugsweise Hexamethylendiisocyanat-1,6; cycloaliphatische Diisocyanate wie Cyclohexan-1,3-und-1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexlylmethandiisocyanat sowie die entsprechenden Isomerengemische, und vorzugsweise aromatische Di- und Polyisocyanate, wie z.B. 2,4- und 2,6-Toluylendiisocyanat und die entsprechenden Isomerengemische, 4,4'-, 2,4'- und 2,2'-Diphenylmethandiisocyanat und die entsprechenden Isomerengemische , Mischungen aus 4,4'- und 2,4'-Diphenylmethandiisocyanaten, Polyphenyl-polymethylenpolyisocyanate, Mischungen aus 4,4'-, 2,4'- und 2,2'-Diphenyl-methandiisocyanaten und Polyphenylpolymethylenpolyisocyanaten (Roh-MDI) und Mischungen aus Roh-MDI und Toluylendiisocyanaten. Die organischen Di- und Polyisocyanate können einzeln oder in Form ihrer Mischungen eingesetzt werden.
   Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.-%, vorzugsweise von 31 bis 21 Gew.-%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 6000, insbesondere mit Molekulargewichten bis 1500, modifiziertes 4,4'-Diphenylmethandiisocyanat, modifizierte 4,4'- und 2,4'-Diphenylmethandiisocyanatmischungen, oder modifiziertes Roh-MDI oder 2,4- bzw. 2,6-Toluylendiisocyanat, wobei die Di- bzw. Polyoxyalkylenglykole einzeln oder als Gemische eingesetzt werden können. Beispielhaft genannt seien: Diethylen-, Dipropylenglykol, Polyoxyethylen-, Polyoxypropylen- und Polyoxypropylenpolyoxyethenglykole, -triole und/oder -tetrole.
   Geeignet sind auch NCO-Gruppen enthaltende Prepolymere mit NCO-Gehalten von 25 bis 3,5 Gew.-%, vorzugsweise von 21 bis 14 Gew.-%, bezogen auf das Gesamtgewicht, hergestellt aus den nachfolgend beschriebenen Polyester- und/oder vorzugsweise Polyetherpolyolen und 4,4'-Diphenylmethandiisocyanat, Mischungen aus 2,4'- und 4,4'-Diphenylmethandiisocyanat, 2,4-und/oder 2,6-Toluylendiisocyanaten oder Roh-MDI. Bewährt haben sich ferner flüssige, Carbo-diimidgruppen und/oder Isocyanuratringe enthaltende Polyisocyanate mit NCO-Gehalten von 33,6 bis 15, vorzugsweise 31 bis 21 Gew.-%, bezogen auf das Gesamtgewicht, z.B. auf Basis von 4,4'-, 2,4'- und/oder 2,2'-Diphenylmethandiisocyanat und/oder 2,4- und/oder 2,6-Toluylendiisocyanat. Die modifizierten Polyisocyanate können miteinander oder mit unmodifizierten organischen Polyisocyanaten wie z.B. 2,4'-, 4,4'-Diphenylmethandiisocyanat, Roh-MDI, 2,4- und/oder 2,6-Toluylendiisocyanat gegebenenfalls gemischt werden.
   Besonders bewährt haben sich als organische Polyisocyanate und kommen daher vorzugsweise zur Anwendung: Toluylendiisocyanat, MDI, Roh-MDI, Mischungen aus Toluylendiisocyanaten und Roh-MDI oder Mischungen aus modifizierten Urethangruppen enthaltenden organischen Polyisocyanaten mit einem NCO-Gehalt von 33,6 bis 15 Gew.-%, insbesondere solche auf Basis von Toluylendiisocyanaten, 4,4'-Diphenylmethandiisocyanat, Diphenylmethandiisocyanat-Isomerengemischen oder Roh-MDI und insbesondere Roh-MDI mit einem Diphenylmethandiisocyanat-Isomerengehalt von 30 bis 80 Gew.%, vorzugsweise von 30 bis 55 Gew.-%.
b) Als höhermolekulare Verbindungen mit mindestens zwei reaktiven Wasserstoffatomen werden neben den oben beispielhaft beschriebenen zweckmäßigerweise solche mit einer Funktionalität von 2 bis 4, vorzugsweise 2 bis 3, und einem Molekulargewicht von 300 bis 10000, vorzugsweise von 300 bis 5000 verwendet.
   Bewährt haben sich z. B. Polyetherpolyamine und/oder vorzugsweise Polyole, ausgewählt aus der Gruppe der Polyetherpolyole, Polyesterpolyole, Polythioetherpolyole, Polyesteramide, hydroxylgruppenhaltigen Polyacetale und hydroxylgruppenhaltigen aliphatischen Polycarbonaten oder Mischungen aus mindestens zwei der genannten Polyole. Vorzugsweise Anwendung finden Polyesterpolyole und/oder Polyetherpolyole. Die Hydroxylzahl der Polyhydroxylverbindungen beträgt dabei in aller Regel 20 bis 80 und vorzugsweise 28 bis 56.
   Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydriden eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Tei-len und insbesondere Adipinsäure. Beispiele für zwei- und mehrwertige Alkohole, insbesondere Diole, sind: Ethandiol, Diethylenglykol, 1,2- bzw. 1,3-Propandiol, Dipro-pylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure.
   Zur Herstellung der Polyesterpolyole können die organischen z.B. aromatischen und vorzugsweise aliphatischen, Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a., in der Schmelze bei Temperaturen von 150 bis 250°C, vorzugsweise 180 bis 220°C, gegenbenfalls unter vermindertem Druck bis zu der gewünschten Säurezahl, die vorteilhafterweise kleiner als 10, vorzugsweise kleiner als 2, ist, polykondensiert werden. Nach einer bevorzugten Ausführungsform wird das Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.
   Zur Herstellung der Polyesterpolyole werden die organischen Polycarbonsäuren und/oder -derivate und mehrwertigen Alkohole vorteilhafterweise im Molverhältnis von 1:1 bis 1,8, vorzugsweise 1:1,05 bis 1,2, polykondensiert. Die erhaltenen Polyesterpolyole besitzen vorzugsweise eine Funktionalität von 2 bis 4, insbesondere 2 bis 3, und ein Molekulargewicht von 480 bis 3000, insbesondere 600 bis 2000.
   Insbesondere als Polyole verwendet werden jedoch Polyetherpolyole, die nach bekannten Verfahren, beispielsweise durch anionische Polymerisation mit Alkalihydroxiden, wie z.B. Natrium- oder Kaliumhydroxid, oder Alkalialkoholaten, wie z.B. Natriummethylat, Natrium- oder Kaliumethylat oder Kaliumisopropylat, als Katalysatoren und unter Zusatz mindestens eines Startermoleküls, das 2 bis 4, vorzugsweise 2 bis 3, reaktive Wasserstoffatome gebunden enthält, oder durch kationische Polymerisation mit Lewisssäuren, wie Antimonpentachlorid, Borfluorid-Etherat u.a., oder Bleicherde, als Katalysatoren aus einem oder mehreren Alkylenoxiden mit 2 bis 4 Kohlenstoffatomen im Alkylenrest hergestellt werden.
   Für spezielle Einsatzzwecke können auch monofunktionelle Starter in den Polyetheraufbau eingebunden werden. Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden.
   Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegenbenfalls N-mono- N,N- und N,N'-dialkylsubstituierte Diamine mit 1 bis 4 Kohlenstoffatomen im Alkylrest, wie gegebenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamin, 2,3-, 2,4- und 2,6-Toluylendiamin und 4,4'-, 2,4'- und 2,2'-Diaminodiphenylmethan. Als Startermoleküle kommen ferner in Betracht: Alkanolamine, wie z.B. Ethanolamin, N-Methyl- und N-Ethylethanolamin, Dialkanolamine, wie z.B. Diethanolamin, N-Methyl- und N-Ethyldiethanolamin, und Trialkanolamine, wie z.B. Triethanolamin und Ammoniak. Vorzugsweise verwendet werden mehrwertige, insbesondere zwei- und/oder dreiwertige Alkohole, wie Ethandiol, Propandiol-1,2 und -2,3, Diethylenglykol, Dipropylenglykol, Butandiol-1,4, Hexandiol-1,6, Glycerin, Trimethylolpropan und Pentaerythrit.
   Die Polyetherpolyole, vorzugsweise Polyoxypropylen- und Polyoxypropylenpoly-oxyethylenpolyole, besitzen eine Funktionalität von vorzugsweise 2 bis 4 und insbesondere 2 bis 3 und Molekulargewichte von 300 bis 8000, vorzugsweise 300 bis 6000 und insbesondere 1000 bis 5000, und geeignete Polyoxytetramethylenglykole ein Molekulargewicht bis ungefähr 3500.
   Als Polyetherpolyole eignen sich ferner polymermodifizierte Polyetherpolyole, vorzugsweise Pfropfpolyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90:10 bis 10:90, vorzugsweise 70:30 bis 30:70, in zweckmäßigerweise den vorgenannten Polyetherpolyolen analog den Angaben der deutschen Patentschriften 1111394, 1222669 (US-A-3304273, 3383351, 3523093), 1152536 (GB 1040452) und 1152537 (GB 987618) hergestellt werden, sowie Polyetherpolyoldispersionen, die als disperse Phase, üblicherweise in einer Menge von 1 bis 50 Gew.-%, vorzugsweise 2 bis 25 Gew.-%, enthalten: z.B. Polyharnstoffe, Polyhydrazide, tert.-Aminogruppen gebunden enthaltende Polyurethane und/oder Melamin und die z.B. beschrieben werden in der EP-B-011752 (US-A-4304708), US-A-4374209 und DE-A-3231497.
   Die Polyetherpolyole können ebenso wie die Polyesterpolyole einzeln oder in Form von Mischungen verwendet werden. Ferner können sie mit den Pfropfpolyether-polyolen oder Polyesterpolyolen sowie den hydroxylgruppenhaltigen Polyesteramiden, Polyacetalen, Polycarbonaten und/oder Polyetherpolyaminen gemischt werden.
   Als hydroxylgruppenhaltige Polyacetale kommen z.B. die aus Glykolen, wie Diethylenglykol, Triethylenglykol, 4,4'-Dihydroxyethoxydiphenyldimethylmethan, He-xandiol und Formaldehyd herstellbaren Verbindungen in Frage. Auch durch Polyme-risation cyclischer Acetale lassen sich geeignete Polyacetale herstellen.
   Als Hydroxylgruppen aufweisende Polycarbonate kommen solche der an sich bekannten Art in Betracht, die beispielsweise durch Umsetzung von Diolen, wie Propandiol-1,3, Butandiol-1,4 und/oder Hexandiol-1,6, Diethylenglykol, Triethylenglykol oder Tetraethylenglykol mit Diarylcarbonaten, z.B. Diphenylcarbonat, oder Phosgen hergestellt werden können.
   Zu den Polyesteramiden zählen z.B. die aus mehrwertigen, gesättigen und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.
   Geeignete Polyetherpolyamine können aus den oben genannten Polyetherpolyolen nach bekannten Verfahren hergestellt werden. Beispielhaft genannt seien die Cyanoalkylierung von Polyoxyalkylenpolyolen und anschließende Hydrierung des gebildeten Nitrils (US-A-3267050) oder die teilweise oder vollständige Aminierung von Polyoxyalkylenpolyolen mit Aminen oder Ammoniak in Gegenwart von Wasserstoff und Katalysatoren (DE-A-1215373).
   Neben den höhermolekularen Verbindungen mit mindestens zwei reaktiven Wasserstoffatomen können selbstverständlich auch solche mit nur einem reaktiven Wasserstoffatom, insbesondere Monoole, mit verwendet werden.
c) Als Kettenverlängerungs- und/oder Vernetzungsmittel verwendet werden Diole und/oder Triole mit Molekulargewichten kleiner als 600, vorzugsweise 60 bis 300. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4-, 1,3,5-Trihydroxycyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.
   Die Kettenverlängerungsmittel, Vernetzungsmittel oder Mischungen davon kommen zweckmäßigerweise in einer Menge von 1 bis 30 Gew.-%, vorzugsweise von 3 bis 25 Gew.-%, bezogen auf das Gewicht der Komponente (b), zum Einsatz.
d) Als Treibmittel können die aus der Polyurethanchemie allgemein bekannten Fluorchlorkohlenwasserstoffe (FCKW) sowie hoch- und/oder perfluorierte Kohlen-wasserstoffe verwendet werden. Der Einsatz dieser Stoffe wird jedoch aus ökologischen Gründen stark eingeschränkt bzw. ganz eingestellt. Neben den HFCKW und HFKW bieten sich insbesondere aliphatische und/oder cycloaliphatische Kohlenwasserstoffe, insbesondere Pentan und Cyclopentan, oder Acetale, wie z. B. Methylal, als Alternativtreibmittel an.
   Diese physikalischen Treibmittel werden üblicherweise der Polyolkomponente des Systems zugesetzt. Sie können jedoch auch in der Isocyanatkomponete oder als Kombination sowohl der Polyolkomponente als auch der Isocyanatkomponente zugesetzt werden.
   Möglich ist auch ihre Verwendung, zusammen mit hoch- und/oder perfluorierten Kohlenwasserstoffen, in Form einer Emulsion der Polyolkomponente. Als Emulga-toren, sofern sie Anwendung finden, werden üblicherweise oligomere Acrylate eingesetzt, die als Seitengruppen Polyoxyalkylen- und Fluoralkanreste gebunden enthalten und einen Fluorgehalt von ungefährt 5 bis 30 Gew.-% aufweisen. Derartige Produkte sind aus der Kunststoffchemie hinreichend bekannt, z.B. EP-A-0351614.
   Die eingesetzte Menge des Treibmittels bzw. der Treibmittelmischung liegt dabei bei 1 bis 25 Gew.-%, vorzugsweise 1 bis 15 Gew.-%, jeweils bezogen auf die Komponente (b).
   Weiterhin ist es möglich und üblich, als Treibmittel der Aufbaukomponente (b) Wasser in einer Menge von 0,5 bis 15 Gew.-%, vorzugsweise 1 bis 5 Gew.-%, bezogen auf die Komponente (b), zuzusetzen. Der Wasserzusatz kann in Kombination mit dem Einsatz der anderen beschriebenen Treibmittel erfolgen.
e) Als Katalysatoren zur Herstellung der erfindungsgemäßen Polyurethane werden die in der Polyurethanchemie üblichen Katalysatoren eingesetzt. Insbesondere werden Verbindungen verwendet, die die Reaktion der reaktive Wasserstoffatome, insbesondere Hydroxylgruppen, enthaltenden Verbindungen der Komponenten (b) und gegebenenfalls (c) mit den organischen, gegebenenfalls modifizierten,organischen Isocyanaten (a) stark beschleunigen. In Betracht kommen organische Metallverbindungen, wie Eisen(II)-chlorid, Zinkchlorid, Bleioctoat und vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat, und Dialkylzinn-(IV)-salze von organischen Carbonsäuren, z.B. Dibutylzinndiacetat, Dibutylzinndilaurat, Dibutylzinnmaleat und Dioctylzinndiacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethylbutandiamin, N,N,N',N'-Tetramethylhexandiamin-1,6, Pentamethyldiethylentriamin, Tetramethyldiaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diazabicyclo-(2,2,2)-octan, und Alkanol-verbindungen, wie Triethanolamin, Triisopropanolamin, N-Methyl- und N-Ethyldiethanolamin und Dimethylethanolamin. Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxid, wie Natriumhydroxid, und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen.
   Vorzugsweise verwendet werden 0,001 bis 5 Gew.-%, insbesondere 0,05 bis 2 Gew.-%, Katalysator bzw. Katalysatorkombination, bezogen auf das Gewicht der Aufbaukomponente (b).
f) Der Reaktionsmischung können gegebenfalls noch weitere Hilfsmittel und/oder Zusatzstoffe einverleibt werden. Genannt seien beispielsweise Flammschutzmittel, oberflächenaktive Substanzen, Schaumstabilisatoren, Zellregler, Füllstoffe, Farbstoffe, Pigmente, Hydrolyseschutzmittel, fungistatische und bakteriostatisch wirkende Substanzen.

Einzelheiten zu den einsetzbaren Hilfsmitteln und Zusatzstoffen, den übrigen Komponenten und den Verfahrens- und Reaktionsbedingungen der Polyurethanherstellung sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, dem weiter oben zitierten Kunststoff-Handbuch, Band VII, "Polyurethane", oder einschlägigen Patentschriften, wie beispielsweise den EP-A-0711798, DE-A-4408430 oder DE-A-19502969, zu entnehmen.

Vorzugsweise werden zur Herstellung der Polyurethane die Komponenten in solchen Mengen zur Umsetzung gebracht, daß das Äquivalenzverhältnis von NCO-Gruppen der Isocyanate (a) zur Summe der reaktiven Wasserstoffatome der Komponenten (b) und gegebenfalls (c) 0,80 bis 1,25:1, vorzugsweise 0,90 bis 1,15:1 , beträgt.

Die Polyurethane werden vorteilhafterweise nach dem one-shot-Verfahren, beispielsweise mit Hilfe der Hochdruck- oder Niederdruck-Technik in offenen oder geschlossenen Formwerkzeugen, beispielsweise metallischen Formwerkzeugen hergestellt. Üblich ist auch die kontinuierliche Auftragung des Reaktionsgemisches auf geeigneten Bandstraßen zur Erzeugung von Schaumblöcken.

Als besonders vorteilhaft hat es sich erwiesen, nach dem Zweikomponentenverfahren zu arbeiten und als Komponente (A) die erfindungsgemäße entmischungsstabile Komponente, bestehend aus den Komponenten (b) und gegebenenfalls (c) bis (f), sowie als Komponente (B) die organischen und/oder modifizierten organischen Isocyanate (a), gegebenenfalls im Gemisch mit weiteren Hilfsmitteln und/oder Zusatzstoffen (f), zu verwenden.

Die Komponenten (A) und (B) werden vorzugsweise bei einer Temperatur von 15 bis 90°C, insbesondere von 20 bis 60°C und besonders bevorzugt von 20 bis 40°C, gemischt und in das offene oder gegebenenfalls unter erhöhtem Druck in das geschlossene Formwerkzeug eingebracht oder bei einer kontinuierlichen Arbeitsstation auf ein Band, das die Reaktionsmasse aufnimmt, aufgetragen. Die Vermischung kann, wie bereits dargelegt wurde, mechanisch mittels eines Rührers, mittels einer Rührschnecke oder durch eine Hochdruckvermischung in einer Düse durchgeführt werden. Die Formwerkzeugtemperatur beträgt zweckmäßigerweise 20 bis 110°C, vorzugsweise 30 bis 60°C und insbesondere 35 bis 55°C.

Mit der erfindungsgemäßen homogenen entmischungsstabilen Polyolkomponente können Polyurethane mit einem breiten Eigenschaftsspektrum, wie Weichschäume, Hartschäume, Coatings, Gießelastomere, RIM, Integralschäume, Duromerschäume und thermoplastische PUR, hergestellt werden. Vorzugsweise wird das erfindungsgemäße Verfahren bei der Herstellung von RIM und Integralschäumen eingesetzt. Die nach dem erfindungsgemäßen Verfahren hergestellten PUR bzw. PUR-Schaumstoffe weisen eine Dichte von10 bis 1500 kg/m³ auf. Die vorliegende Erfindung soll anhand der nachstehenden Beispiele näher erläutert werden.

### Beispiel 1 - Vergleichsbeispiel

80 Gew.-Tl. Lupranol 2042 und 20 Gew.-Tl. Monoethylenglykol wurden bei Raumtemperatur 10 Minuten intensiv zu einem Polyol-Kettenverlängerergemisch verrührt. Dazu gab man 0,1 Gew.-Tl. DC 193, 0,2 Gew.-Tl. Tetramethylhexamethylendiamin, 0,8 Gew.-Tl. Dabco 33LV, sowie 0,75 Gew.-Tl. Wasser. Bereits nach 24 Stunden trat eine deutliche Phasenseparation auf.

### Beispiel 1A

Der durch Rühren homogenisierten Komponente aus Beispiel 1 wurden 0,5 Gew.-Tl. 2,2'-Dimethyl-4.4'-methylenbiscyclohexylamin zugesetzt und auf 50°C erwärmt. Nachdem 10 Minuten bei dieser Temperatur gerührt wurde, erfolgte unter intensivem Rühren die Zugabe von 0,38 Gew.-Tl. Lupranat T 80. Nach erfolgter Zugabe des Isocyanates wurde noch 10 Minuten gerührt. Dazu gab man 0,1 Gew.-Tl. DC 193, 0,2 Gew.-Tl. Tetramethylenhexamethylendiamin, 0,8 Gew.-Tl. Dabco 33LV, sowie 0,75 Gew.-Tl. Wasser.

Die so behandelte Polyol-Komponente war mindestens 3 Monate lagerstabil. Sie war problemlos zu einem Integralschaum verarbeitbar, wobei die Reaktionsbedingungen gegenüber dem Einsatz der unbehandelten Komponente (Beispiel 1) nicht verändert wurden.

### Beispiel 2 - Vergleichsbeispiel

80 Gew.-Tl. Lupranol 2042 und 20 Gew.-Tl. Butandiol-1.4 wurden durch Rühren vermischt. Bereits nach 24 Stunden trat eine deutliche Phasenseparation auf.

### Beispiel 2A

Der durch Rühren homogenisierten Komponente aus Beispiel 2 wurden 0,5 Gew.-Tl. 2,2'-Dimethyl-4.4'-methylenbiscyclohexylamin zugesetzt und auf 50°C erwärmt. Nachdem 10 Minuten bei dieser Temperatur gerührt wurde, erfolgte unter intensivem Rühren die Zugabe von 0,38 Gew.-Tl. Lupranat T 80. Nach erfolgter Zugabe des Isocyanates wurde noch 10 Minuten gerührt.

Das so behandelte Polyol-Kettenverlängerer-Gemisch war mindestens 3 Monate lagerstabil. Das Reaktionsverhalten veränderte sich gegenüber der unbehandelten Komponente (Beispiel 2) nicht.

### Beispiel 3 - Vergleichsbeispiel

85 Gew.-Tl. Lupranol 2045 und 15 Gew.-Tl. Monoethylenglykol wurden 10 Minuten intensiv durch Rühren vermischt. Nach 24 Stunden separierte die ursprünglich homogene Komponente in zwei Phasen.

### Beispiel 3A

Der durch Rühren homogenisierten Komponente aus Beispiel 3 wurden 0,5 Gew.-Tl. 2,2'-Dimethyl-4.4'-methylenbiscyclohexylamin zugesetzt. Nachdem 15 Minuten bei dieser Temperatur gerührt wurde, erfolgte unter intensivem Rühren die Zugabe von 0,54 Gew.-Tl. Lupranat MI. Nach erfolgter Zugabe des Isocyanates wurde noch 10 Minuten gerührt.

Das so behandelte Polyol-Kettenverlängerer-Gemisch war mindestens 3 Monate lagerstabil. Das Reaktionsverhalten veränderte sich gegenüber der unbehandelten Komponente (Beispiel 3) nicht.

### Beispiel 4 - Vergleichsbeispiel

Ein Gemisch aus 90 Gew.-Tl. Lupraphen 8101 und 10 Gew.-Tl. Monoethylenglykol wurde durch Rühren homogenisiert. Nach ca. 8 Tagen begann sich das System zu separieren.

### Beispiel 4A

Der durch Rühren homogenisierten Komponente aus Beispiel 4 wurden 0,25 Gew.-Tl. 2,2'-Dimethyl-4.4'-methylenbiscyclohexylamin zugesetzt und auf 50°C erwärmt. Nachdem 15 Minuten bei dieser Temperatur gerührt wurde, erfolgte unter intensivem Rühren die Zugabe von 0,19 Gew.-Tl. Lupranat T 80. Nach erfolgter Zugabe des Isocyanates wurde noch 10 Minuten gerührt.

Das so behandelte Polyol-Kettenverlängerer-Gemisch war mindestens 3 Monate lagerstabil. Das Reaktionsverhalten veränderte sich gegenüber der unbehandelten Komponente (Beispiel 4) nicht.

### Beispiel 5 - Vergleichsbeispiel

Ein Gemisch aus 80 Gew.-Tl. Polytetrahydrophuran (PTHF) 2000 und 20 Gew.-Tl. Butandiol-1.4 wurde auf 50°C aufgeheizt und durch Rühren homogenisiert. Lagerte man das Gemisch bei dieser Temperatur, so begann sich das System nach 12 Stunden zu separieren.

### Beispiel 5A

Der durch Rühren homogenisierten Komponente aus Beispiel 5 wurden 0,5 Gew.-Tl. 2,2'-Dimethyl-4.4'-methylenbiscyclohexylamin zugesetzt und eine Temperatur von 50°C beibehalten. Nachdem 15 Minuten bei dieser Temperatur gerührt wurde, erfolgte unter intensivem Rühren die Zugabe von 0,38 Gew.-Tl. Lupranat T 80. Nach erfolgter Zugabe des Isocyanates wurde noch 10 Minuten gerührt.

Das so behandelte Polyol-Kettenverlängerer-Gemisch war mindestens 3 Monate lagerstabil. Das Reaktionsverhalten veränderte sich gegenüber der unbehandelten Komponente (Beispiel 5) nicht.
Lupranol® 2045 - OHZ 35 mg KOH/g, Polyether auf Basis Ethylenoxid und Propylenoxid (BASF);
Lupranol® 2042 - OHZ 27 mg KOH/g, Polyether auf Basis Ethylenoxid und Propylenoxid (BASF);
Lupraphen® 8101 - OHZ 56 mg KOH/g, Polyesteralkohol auf Basis Adipinsäure, Ethylen und Butylenglykol (BASF);
PTHF 2000 - OHZ 56 mg KOH/g (BASF);
Lupranat® T 80 - NCO 48%;
Toluylendiisocyanat (80/20) (BASF);
Dabco 33LV - Aminkatalysator (Air Products);
DC 193 Silikonstabilisator (OSi)

## Patentansprüche

1. Verfahren zur Herstellung einer homogenen entmischungsstabilen Polyurethankomponente, bestehend aus mindestens einer höhermolekularen Verbindung mit mindestens zwei reaktiven Wasserstoffatomen und niedermolekularen Kettenverlängerungs- und/oder Vernetzungsmitteln, sowie gegebenenfalls Treibmitteln, Katalysatoren und weiteren Hilfsmitteln und/oder Zusatzstoffen, **dadurch gekennzeichnet, daß** dieser Komponente mindestens ein primäres und/oder sekundäres Amin in Anteilen von 0,05 bis 7 Gew.-%, bezogen auf das Gewicht der Polyolkomponente, sowie mindestens ein organisches und/oder modifiziertes organisches Isocyanat in Anteilen von 0,05 bis 5 Gew.-%, bezogen auf das Gewicht der Polykomponente, zugegeben werden.

2. Verfahren gemäß Anspruch 1, **dadurch gekennzeichnet, daß** das Molekulargewicht der eingesetzten Kettenverlängerer und/oder Vernetzer zwischen 62 und 600 g/mol liegt.

3. Verfahren gemäß Anspruch 1 oder 2, **dadurch gekennzeichnet, daß** der Anteil der Kettenverlängerer und/oder Vernetzer, bezogen auf die Polyolkomponente, 1 bis 30 Gew.-Tl. beträgt.

4. Verfahren gemäß einem der Ansprüche 1 bis 3, **dadurch gekennzeichnet, daß** als höhermolekulare Verbindungen mit mindestens zwei reaktiven Wasserstoffatomen Polyetherole und/oder Polyesterole mit aciden H-Atomen verwendet werden.

5. Verfahren gemäß einem der Ansprüche 1 bis 4, **dadurch gekennzeichnet, daß** die höhermolekularen Verbindungen mit mindestens zwei reaktiven Wasserstoffatomen und die Kettenverlängerer und/oder Vernetzer in einem Verhältnis von 95 zu 5 bis 70 zu 30 vorliegen.

6. Verfahren gemäß einem der Ansprüche 1 bis 5, **dadurch gekennzeichnet, daß** als Amine aliphatische und/oder cycloaliphatische Amine eingesetzt werden.

7. Verfahren gemäß einem der Ansprüche 1 bis 6, **dadurch gekennzeichnet, daß** die Amine in Anteilen von 0,5 bis 3 Gew.-%, bezogen auf das Gewicht der Polyolkomponente, eingesetzt werden.

8. Verfahren gemäß einem der Ansprüche 1 bis 7, **dadurch gekennzeichnet, daß** als organische und/oder modifizierte organische Isocyanate aromatische Isocyanate eingesetzt werden.

9. Verfahren gemäß einem der Ansprüche 1 bis 8, **dadurch gekennzeichnet, daß** als organische und/oder modifizierte organische Isocyanate NCO-Gruppen enthaltende Prepolymere oder NCO-haltige Umsetzungsprodukte eingesetzt werden.

10. Verfahren gemäß einem der Ansprüche 1 bis 9 **dadurch gekennzeichnet, daß** die organischen und/oder modifizierten organischen Isocyanate in Anteilen von 0,05 bis 5 Gew.-%, bezogen auf das Gewicht der Polyolkomponente, eingesetzt werden.

11. Homogene entmischungsstabile Polyurethankomponente, bestehend aus mindestens einer höhermolekularen Verbindung mit mindestens zwei reaktiven Wasserstoffatomen und niedermolekularen Kettenverlängerungs- und/oder Vernetzungsmitteln, sowie gegebenenfalls Treibmitteln, Katalysatoren und weiteren Hilfsmitteln und/oder Zusatzstoffen, herstellbar durch Zugabe mindestens eines primären und/oder sekundären Amins in Anteilen von 0,05 bis 7 Gew.-%, bezogen auf das Gewicht der Polyolkomponente, sowie mindestens eines organischen und/oder modifizierten organischen Isocyanates in Anteilen von 0,05 bis 5 Gew.-%, bezogen auf das Gewicht der Polyolkomponente.

12. Verwendung der homogenen entmischungsstabilen Polyurethankomponente gemäß Anspruch 11 zur Herstellung von Polyurethanen.

## Claims

1. A process for preparing a homogeneous polyurethane component which is stable to separation and is composed of at least one compound of relatively high molecular weight having at least two reactive hydrogen atoms and low-molecular-weight chain extenders and/or crosslinkers and, if desired, of blowing agents, catalysts and other auxiliaries and/or additives, which comprises the addition to this component of at least one primary and/or secondary amine in proportions of from 0.05 to 7 % by weight, based on the weight of the polyol component, and at least one organic and/or modified organic isocyanate in proportions of from 0.05 to 5 % by weight, based on the weight of the polyol component.

2. A process as claimed in claim 1, wherein the molecular weight of the chain extenders and/or crosslinkers used is from 62 to 600 g/mol.

3. A process as claimed in claim 1 or 2, wherein the proportion of the chain extenders and/or crosslinkers, based on the polyol component, is from 1 to 30 parts by weight.

4. A process as claimed in one of claims 1 to 3, wherein the higher-molecular-weight compounds having at least two reactive hydrogen atoms are polyetherols and/or polyesterols having acidic hydrogen atoms.

5. A process as claimed in one of claims 1 to 4, wherein the higher-molecular-weight compounds having at least two reactive hydrogen atoms and the chain extenders and/or crosslinkers are present in a ratio of from 95:5 to 70:30.

6. A process as claimed in one of claims 1 to 5, wherein the amines are aliphatic and/or cycloaliphatic amines.

7. A process as claimed in one of claims 1 to 6, wherein the amines are used in proportions of from 0.5 to 3 % by weight, based on the weight of the polyol component.

8. A process as claimed in one of claims 1 to 7, wherein the organic and/or modified organic isocyanates are aromatic isocyanates.

9. A process as claimed in one of claims 1 to 8, wherein the organic and/or modified organic isocyanates are prepolymers containing NCO groups or NCO-containing reaction products.

10. A process as claimed in one of claims 1 to 9, wherein the organic and/or modified organic isocyanates are used in proportions of from 0.05 to 5 % by weight, based on the weight of the polyol component.

11. A homogeneous polyurethane component which is stable to separation and is composed of at least one compound of relatively high molecular weight having at least two reactive hydrogen atoms and low-molecular-weight chain extenders and/or crosslinkers and, if desired, of blowing agents, catalysts and other auxiliaries and/or additives, which can be prepared by the addition of at least one primary and/or secondary amine in proportions of from 0.05 to 7 % by weight, based on the weight of the polyol component, and at least one organic and/or modified organic isocyanate in proportions of from 0.05 to 5 % by weight, based on the weight of the polyol component.

12. The use of the homogeneous polyurethane component which is stable to separation as claimed in claim 11 for preparing polyurethanes.

## Revendications

1. Procédé pour la préparation d'un composant polyuréthanne homogène, stable à la séparation du mélange, constitué par au moins un composé de haut poids moléculaire présentant au moins deux atomes d'hydrogène réactifs et des agents d'allongement de chaîne et/ou des réticulants de bas poids moléculaire, ainsi que, le cas échéant, des agents gonflants, des catalyseurs et d'autres adjuvants et/ou additifs, **caractérisé en ce qu'**on ajoute à ce composant au moins une amine primaire et/ou secondaire en des proportions de 0,05 à 7% en poids par rapport au poids du composant polyol ainsi qu'au moins un isocyanate organique et/ou organique modifié en des proportions de 0,05 à 5% en poids par rapport au poids du composant polyol.

2. Procédé selon la revendication 1, **caractérisé en ce que** le poids moléculaire des agents d'allongement de chaîne et/ou des réticulants utilisés se situe entre 62 et 600 g/mole.

3. Procédé selon la revendication 1 ou 2, **caractérisé en ce que** la proportion des agents d'allongement de chaîne et/ou des réticulants est de 1 à 30 parties en poids par rapport au composant polyol.

4. Procédé selon l'une quelconque des revendications 1 à 3, **caractérisé en ce qu'**on utilise comme composés de haut poids moléculaire présentant au moins deux atomes d'hydrogène réactifs des polyétherols et/ou des polyesterols avec des atomes d'hydrogène acides.

5. Procédé selon l'une quelconque des revendications 1 à 4, **caractérisé en ce que** les composés de haut poids moléculaire présentant au moins deux atomes d'hydrogène réactifs et les agents d'allongement de chaîne et/ou les réticulants se trouvent dans un rapport de 95:5 à 70:30.

6. Procédé selon l'une quelconque des revendications 1 à 5, **caractérisé en ce qu'**on utilise comme amines des amines aliphatiques et/ou cycloaliphatiques.

7. Procédé selon l'une quelconque des revendications 1 à 6, **caractérisé en ce que** les amines sont utilisées en des proportions de 0,5 à 3% en poids par rapport au poids du composant polyol.

8. Procédé selon l'une quelconque des revendications 1 à 7, **caractérisé en ce qu'**on utilise comme isocyanates organiques et/ou organiques modifiés des isocyanates aromatiques.

9. Procédé selon l'une quelconque des revendications 1 à 8, **caractérisé en ce qu'**on utilise comme isocyanates organiques et/ou organiques modifiés des prépolymères contenant des groupes NCO ou des produits de transformation contenant des groupes NCO.

10. Procédé selon l'une quelconque des revendications 1 à 9, **caractérisé en ce que** les isocyanates organiques et/ou organiques modifiés sont utilisés en des proportions de 0,05 à 5% en poids par rapport au poids du composant polyol.

11. Composant polyuréthanne homogène, stable à la séparation du mélange, constitué par au moins un composé de haut poids moléculaire présentant au moins deux atomes d'hydrogène réactifs et des agents d'allongement de chaîne et/ou des réticulants de bas poids moléculaire, ainsi que, le cas échéant, des agents gonflants, des catalyseurs et d'autres adjuvants et/ou additifs, pouvant être préparé par addition d'au moins une amine primaire et/ou secondaire en des proportions de 0,05 à 7% en poids par rapport au poids du composant polyol ainsi qu'au moins un isocyanate organique et/ou organique modifié en des proportions de 0,05 à 5% en poids par rapport au poids du composant polyol.

12. Utilisation du composant polyuréthanne homogène stable à la séparation du mélange selon la revendication 11 pour la préparation de polyuréthannes.
